Europäisches Patentamt

European Patent Office

Office européen des brevets

(19)

(11) EP 0 682 238 B1

(12) FASCICULE DE BREVET EUROPEEN

(45) Date de publication et mention
de la délivrance du brevet:
30.10.1996 Bulletin 1996/44

(51) Int Cl.⁶: **G01L 3/10**

(21) Numéro de dépôt: 95400213.5

(22) Date de dépôt: 02.02.1995

(54) **Couplemètre magnétique pour mesures absolues de torsion et de couple**

Magnetisches Torsionsmessgerät zur absoluten Messung von Verdrehung und Drehmoment

Magnetic torquemeter for measuring absolute values of torsion and torque

(84) Etats contractants désignés:
DE GB IT NL SE

(30) Priorité: 08.02.1994 FR 9401371

(43) Date de publication de la demande:
15.11.1995 Bulletin 1995/46

(73) Titulaires:
• ETAT FRANCAIS,
Représenté par le Délégué Général, pour
l'Armement
Paris 7ème (FR)
• O'Mahony, Gérard
92410 Ville d'Avray (FR)
• Slama, Lucien
F-75009 Paris (FR)

(72) Inventeurs:
• O'Mahony, Gérard
F-92410 Ville d'Avray (FR)
• Slama, Lucien
F-75009 Paris (FR)

(56) Documents cités:
DE-A- 4 231 646          US-A- 4 680 976
US-A- 4 984 474

**Description**

La présente invention concerne un couplemètre de type magnétique destiné à la mesure de couples à l'aide d'un arbre de torsion et particulièrement adapté à la mesure de la torsion d'arbres de grande dimension, tels que des arbres d'hélice de marine, de turbines, de broyeurs, etc...,sous l'effet d'un couple.

On connaît déjà des couplemètres utilisant un barreau de torsion dont les extrémités sont reliées respectivement à une extrémité d'arbre fournissant un couple moteur et à une extrémité d'arbre présentant un couple résistant. Le barreau de torsion qui peut tourner par rapport à une cage extérieure portant deux couronnes dentées et leur enroulement stationnaire respectif, comporte deux disques dentés montés à chacune des extrémités du barreau de torsion. Lorsque les dents des disques passent devant celles des couronnes, il se crée une variation du flux magnétique et corrélativement une modulation du signal dans les enroulements dont le déphasage respectif peut ensuite être mesuré à l'aide d'un phasemètre. Toutefois, un tel dispositif nécessite l'emploi de circuits électroniques complexes nécessaires à la synchronisation des déphasages et cette méthode de mesure est en outre mal appropriée aux études de phénomènes transitoires et inadaptée à des mesures à l'arrêt.

Aussi il a été proposé, par le document de brevet FR 2 689 633, de réaliser un couplemètre magnétique formé d'un comparateur angulaire comprenant d'une part des premier et second rotors dentés en matériau ferromagnétique reliés respectivement à des première et seconde extrémités d'un arbre tournant, les dents de chacun des rotors se faisant face et définissant entre elles un entrefer et d'autre part un circuit magnétique extérieur à réluctance constante comprenant un circuit statique en matériau ferromagnétique présentant des première et deuxième extrémités disposées en regard respectivement de parties cylindriques non dentées des premier et second rotor dentés en définissant respectivement entre eux des premier et second entrefers de transfert. Dans un tel couplemètre, une sonde à effet Hall est disposée dans un entrefer de mesure défini dans le circuit magnétique extérieur alimenté par des moyens d'excitation et délivre un signal électrique d'amplitude proportionnelle à la variation de réluctance dans l'entrefer de mesure et donc au couple appliqué à l'arbre tournant.

Un tel dispositif ne permet cependant pas d'effectuer une mesure absolue du couple car il n'y a pas de référence de zéro. C'est la limitation principale de ce dispositif.

On notera qu'une correction électronique du signal de mesure, qui permettrait d'afficher zéro pour un couple nul, ne peut couvrir toute la plage de variation des paramètres perturbateurs d'origine mécanique ou thermique. Elle exigerait par ailleurs une stabilité absolue de la source d'alimentation de la sonde à effet Hall.

Il serait possible d'imaginer un perfectionnement du dispositif du brevet FR 2 689 633 pour obtenir une mesure absolue du couple, en accolant et en montant tête bêche le long de l'arbre de torsion deux dispositifs identiques dont les signaux de mesure, égaux et opposés, seraient soustraits l'un de l'autre, la face commune servant de référence.

Cette solution n'est pas entièrement satisfaisante car les deux dispositifs, bien que de conception identique, auraient nécessairement des imperfections différentes et leurs sondes à effet Hall auraient des lois de variation différentes, conduisant là encore à une compensation impossible sur toute la plage de variation des signaux.

En conclusion, le dispositif du brevet FR 2 689 633, quels qu'en soient les perfectionnements, ne permet pas la mesure absolue de la torsion et du couple.

La présente invention vise précisément à réaliser un couplemètre de type magnétique dont la structure d'ensemble permette de palier les inconvénients précités, et qui notamment présente un poids et un encombrement moindres tout en autorisant des précisions de mesure supérieures à celle des dispositifs de l'art antérieur. L'invention doit bien sûr pouvoir s'adapter à des arbres réels pour pouvoir effectuer des mesures de couple sur une chaîne cinématique existante sans démontage de celle-ci. Surtout l'invention doit permettre d'effectuer des mesures absolues de torsion et de couple.

Ces buts sont atteints grâce à un couplemètre magnétique pour la mesure du couple (C) exercé sur un ensemble tournant comprenant des première et seconde sections d'arbre tournant réunies par un arbre de torsion et des premier et second rotors reliés respectivement aux première et seconde sections d'arbre tournant de telle sorte que, sous l'effet du couple (C) appliqué, ces premier et second rotors se déplacent l'un par rapport à l'autre d'un angle de torsion ($\gamma$) proportionnel au couple (C),
caractérisé en ce qu'il comprend un circuit magnétique extérieur fixe en forme de U, dont le flux magnétique créé par une source d'excitation magnétique continue se referme au travers d'entrefers à travers les premier et second rotors, en ce que les premier et second rotors sont constitués chacun d'un plateau annulaire en matériau amagnétique et comportent chacun deux couronnes concentriques de plots ferromagnétiques, les plots du premier rotor étant disposés en regard des plots du second rotor en définissant deux couronnes d'entrefers de mesure, la position relative angulaire des plots situés de part et d'autre du même entrefer de mesure étant telle que la réluctance d'entrefer ($r1(\gamma)$, $r2(\gamma)$) par couple de plots est égale pour les deux couronnes d'entrefers à couple nul, mais que ces réluctances ($r1(\gamma)$, $r2(\gamma)$) varient en sens inverse selon les couronnes lorsqu'apparait un angle de torsion ($\gamma$), dû au couple appliqué (C), en ce qu'il comprend en outre au moins deux sondes d'induction magnétique logées dans l'un des entrefers lisses du circuit magnétique en U et mesurant les flux magnétiques correspondant aux plots de chaque couronne de l'un des premier et second rotors, variant en sens inverse avec l'angle de torsion ($\gamma$), ces deux sondes étant associées à un circuit de traitement produisant un signal électrique de sortie proportionnel à l'angle de torsion ($\gamma$).

Ainsi, avec une telle structure, du fait d'un confinement local des lignes de flux aux seuls plots magnétiques concernés (à l'image d'un moteur à courant continu à collecteur), les fuites magnétiques sont minimisées et la précision du dispositif accrue. En outre, la réduction du circuit magnétique extérieur à un seul étrier couvrant un secteur limité permet de réduire les dimensions du dispositif et ainsi d'y intégrer les circuits électroniques d'alimentation et de mesure qui peuvent alors être placés au plus près des sondes de mesure magnétiques.

La structure particulière du dispositif selon l'invention permet de réaliser un comparateur magnétique double dont les variations de réluctance en sens contraire ont pour effet de doubler la sensibilité du dispositif. En outre, un tel agencement constitue ce que l'on nomme "un appareil de zéro" dont la valeur de repos résulte alors de sa seule géométrie.

Selon un caractéristique particulière de la présente invention, les plots magnétiques présentent une forme en T, les plots des première et seconde couronnes du premier rotor étant liés magnétiquement entre eux deux par deux, et les plots des première et seconde couronnes du second rotor étant au contraire isolés magnétiquement entre eux.

Ces plots peuvent être usinés dans un matériau ferromagnétique conventionnel ou obtenus par frittage à partir de poudre magnétique à très haute résistivité, ce qui autorise un fonctionnement du dispositif pour de grandes vitesse de rotation.

Avantageusement, le couplemètre comprend un dispositif de protection mécanique limitant les déplacements angulaires relatifs entre les premier et second rotors de manière à limiter le couple maximal applicable à l'arbre de torsion. Ce dispositif de protection comprend au moins un élément mâle solidaire de l'un des premier et second rotors et au moins un élément récepteur femelle solidaire de l'autre des premier et second rotors pour recevoir avec un jeu prédéterminé cet élément mâle.

Ce dispositif de protection contre une rupture accidentelle de l'arbre de torsion est particulièrement intéressant dans le cas où le couplemètre est incorporé dans un dispositif de servocommande d'un servo-moteur, tel qu'un servo-moteur d'une direction assistée électriquement d'un véhicule routier.

La source d'excitation magnétique continue peut comprendre un électroaimant ou bien encore un aimant permanent.

Pour assurer une redondance des mesures et conférer ainsi au couplemètre selon l'invention une fiabilité encore meilleure, celui-ci peut comprendre plusieurs circuits magnétiques extérieurs fixes en forme de U répartis à la périphérie des plateaux des premier et second rotors, avec leurs dispositifs associés propres de sondes d'induction magnétique et de circuits de traitement.

Les sondes d'induction magnétique peuvent être constituées par des sondes à effet Hall ou des magnétorésistances.

Selon un mode particulier de réalisation, les circuits d'alimentation des sondes d'induction magnétique et de traitement des signaux délivrés par ces sondes sont placés contre l'une des parois latérales externes du circuit magnétique extérieur fixe en forme de U.

Selon une première application possible, plus particulièrement adaptée à la mesure de couples appliqués à des arbres de grande dimension comme des arbres d'hélices de marine, de turboalternateurs ou de concasseurs par exemple, l'arbre de torsion est constitué directement par un tronçon d'arbre torsible d'un arbre existant, et les premier et second rotors sont liés chacun mécaniquement par l'intermédiaire de deux portions hémicylindriques rigides entourant le tronçon d'arbre torsible à deux sections éloignées d'arbre tournant soumises à l'angle de torsion ($\gamma$). Cette disposition rend le couplemètre montable et démontable sans rupture de l'arbre.

Selon une autre application possible, le couplemètre magnétique selon l'invention est incorporé dans un dispositif de servocommande d'un servomoteur, tel qu'un servomoteur d'une direction assistée électriquement d'un véhicule routier.

D'autres caractéristiques et avantages de la présente invention ressortiront mieux de la description suivante, faite à titre indicatif et non limitatif, en regard des dessins annexés, sur lesquels:

- la figure 1 est une vue en coupe axiale d'un premier mode de réalisation d'un couplemètre selon l'invention,
- la figure 2 est une vue extérieure selon la ligne II-II de la figure 1 d'un premier plateau du couplemètre avec une partie arrachée,
- la figure 3 est une vue extérieure selon la ligne III-III de la figure 1 d'un second plateau du couplemètre avec une partie arrachée,
- la figure 4 est un premier exemple de réalisation des plots magnétiques des plateaux du couplemètre selon l'invention,
- les figures 5A et 5B montrent en détail la disposition des plots constituant les plateaux des figures 2 et 3,
- la figure 6 est un schéma électrique équivalent du circuit magnétique de mesure de l'invention,
- la figure 7 est une courbe représentant les variations aux bornes des sondes de mesure d'induction magnétique en fonction de l'angle de torsion $\gamma$,
- la figure 8 montre le schéma de principe de la mesure à partir des signaux relevés aux bornes des sondes de mesure d'induction magnétique,
- la figure 9 est une vue en coupe axiale montrant un exemple particulier de mise en oeuvre d'un couplemètre selon l'invention,

- la figure 10 est un second exemple de réalisation des plots magnétiques des plateaux du couplemètre selon l'invention, et

- la figure 11 est une vue en coupe axiale montrant un autre exemple particulier de mise en oeuvre d'un couplemètre selon l'invention.

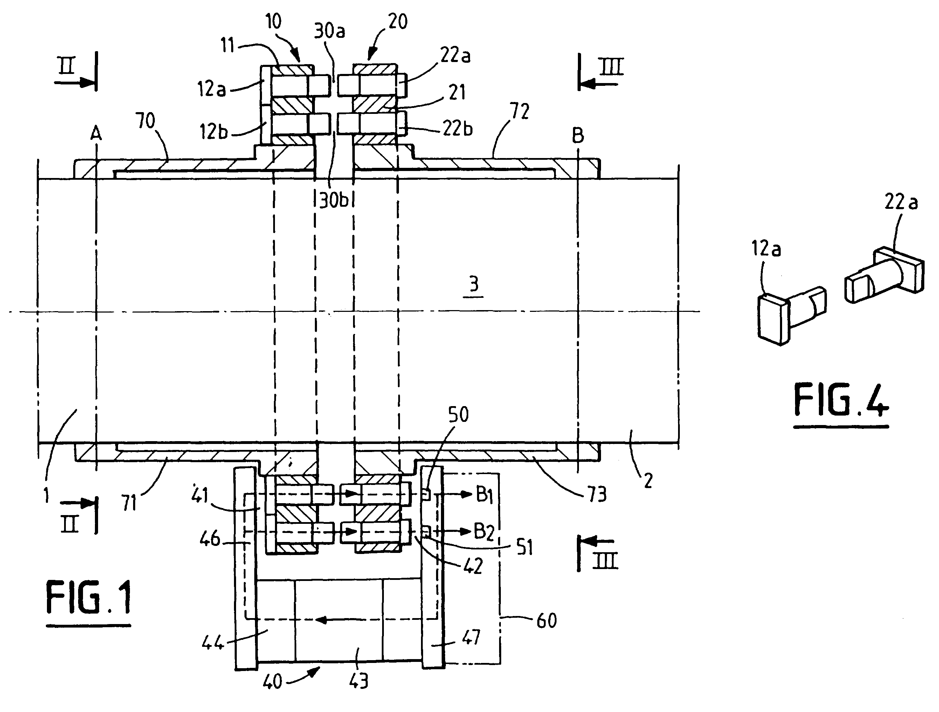

La figure 1 montre une portion d'un arbre tournant de grande dimension comprenant entre des première et seconde sections 1, 2 une partie torsible 3, cet arbre étant associé à un dispositif de mesure de couple conforme à l'invention. Lorsque, par exemple, la première section 1 est reliée à un organe moteur et la seconde section 2 à un organe récepteur, ou vice versa, un couple C est transmis par cet organe moteur à l'organe récepteur au travers de la partie torsible 3 de l'arbre tournant engendrant un déplacement angulaire relatif γ entre les deux sections proportionnel au couple C appliqué.

Le dispositif selon l'invention, qui constitue un couplemètre magnétique, permet de déterminer simplement ce décalage angulaire γ et donc le couple appliqué C.

Dans le mode préférentiel de réalisation de l'invention montré sur la figure 1, le couplemètre comprend essentiellement un comparateur angulaire double constitué par un premier rotor 10 en matériau non magnétique (en aluminium ou en fibre de verre par exemple) qui est relié rigidement au niveau d'un premier plan radial A à la première section 1 de l'arbre tournant et par un second rotor 20 également en matériau non magnétique qui est relié rigidement au niveau d'un second plan radial B à la seconde section 2 de cet arbre tournant. Chaque rotor qui est solidaire en rotation de la section d'arbre à laquelle il est relié est constitué par un plateau annulaire 11, 21 comportant une série de plots en matériau ferromagmétique 12a, 12b; 22a, 22b régulièrement espacés les uns des autres et disposés sur deux couronnes concentriques, les plots 12a, 12b du premier rotor 10 étant disposés en regard des plots 22a, 22b du second rotor 20 en définissant des entrefers de mesure 30a, 30b.

Dans l'exemple représenté, la liaison entre les rotors et les sections de l'arbre tournant est réalisée par l'intermédiaire de portions hémicylindriques rigides en matériau non magnétique, en nombre variable, par exemple 70 à 73, qui s'étendent autour de la partie torsible 3 de cet arbre tournant. Classiquement, ces portions hémicylindriques peuvent être fixées aux sections d'arbre par des éléments d'ancrages (non représentés) placés dans les plans radiaux A et B.

Du fait que les rotors sont rigidement liés aux sections d'arbre tournant 1, 2 de part et d'autre de la partie torsible 3 de l'arbre tournant, la surface en regard des séries de plots magnétiques 12a, 12b; 22a, 22b des rotors 10, 20 est directement liée à l'angle de torsion γ qui varie, comme indiqué plus haut, linéairement avec le couple à mesurer. La réluctance des entrefers de mesure 30a, 30b est donc, pour une géométrie donnée, une fonction directe du couple C à mesurer.

Selon l'invention, cette réluctance tournante est bouclée sur un circuit magnétique extérieur 40, statique, de réluctance constante connue, par l'intermédiaire de deux entrefers lisses 41, 42 qui assurent la continuité du flux entre ce circuit extérieur et les rotors 10, 20 du comparateur magnétique. Ce circuit magnétique extérieur se présente sous la forme d'un étrier ou U s'étendant sur un secteur limité des rotors annulaires 10, 20 et recouvrant au moins un plot magnétique 12a, 12b; 22a, 22b de chaque couronne.

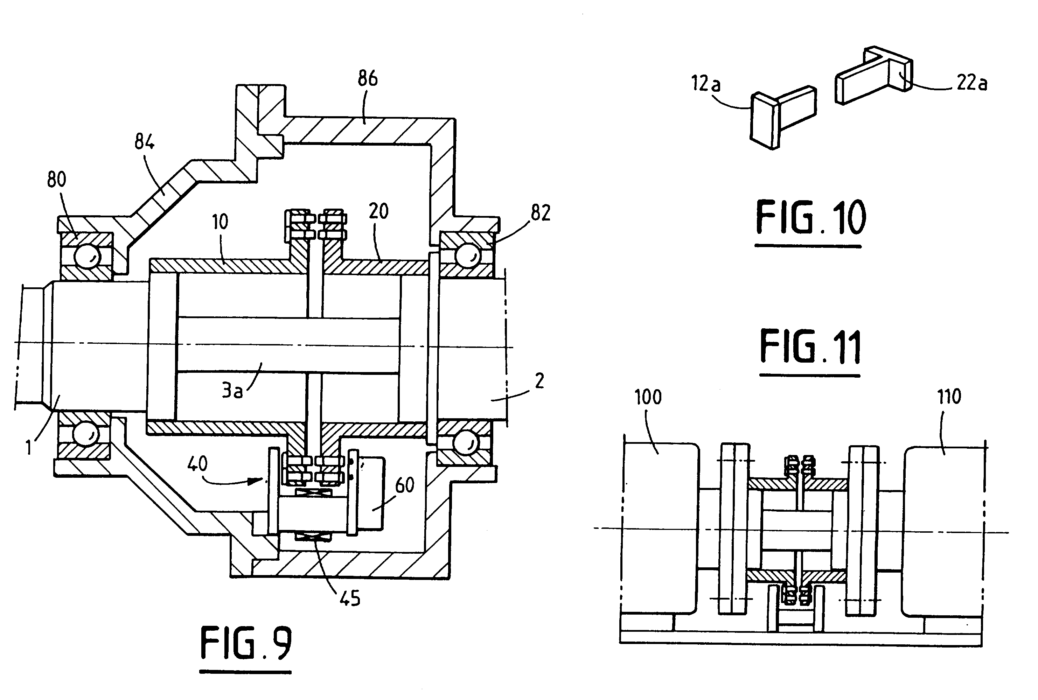

Un moyen d'excitation magnétique continu est associé au circuit magnétique extérieur 40 pour produire au travers de ce circuit et des rotors 10, 20 un flux magnétique dont la variation sera fonction de la variation de réluctance dans les entrefers de mesure 30a, 30b. Ce moyen d'excitation peut être constitué par un ou plusieurs aimants permanents 43 disposés dans le corps de l'étrier 44 ou bien encore, comme représenté sur la figure 9, par une bobine toroïdale 45 centrée sur le corps de l'étrier et alimentée par un courant continu constant.

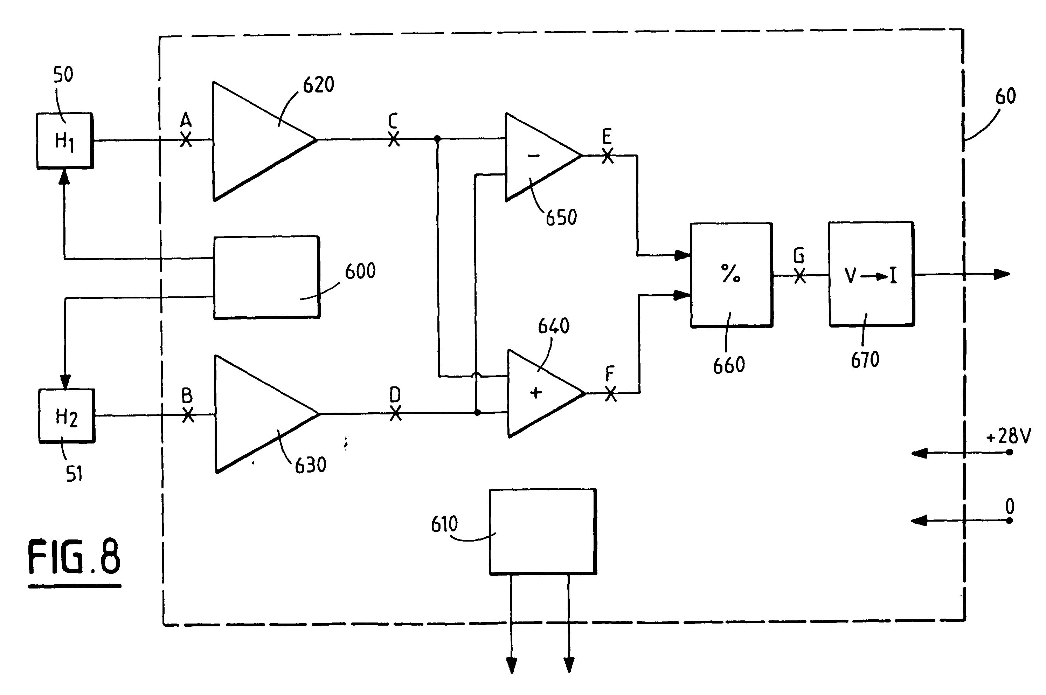

La détermination de la variation de la réluctance dans les entrefers de mesure est réalisée par au moins une sonde de mesure magnétique, par exemple une sonde à effet Hall 50, 51 ou un dispositif magnétorésistant, disposée dans un entrefer lisse 42 au niveau du circuit magnétique extérieur. En pratique, ces sondes sont fixées dans l'une des parois latérales internes 46, 47 de l'étrier qui sont en regard de chacun des rotors annulaires 10, 20 et ainsi le signal électrique analogique fourni par ces sondes peut être traité immédiatement par un circuit de traitement 60 disposé de préférence au niveau de la paroi latérale de réception de ces sondes. Bien entendu, ce circuit de traitement peut regrouper à la fois les circuits d'alimentation des sondes, les circuits d'amplification des signaux de mesure, comme il sera décrit en regard de la figure 8, mais aussi des circuits de compensation des dérives thermiques.

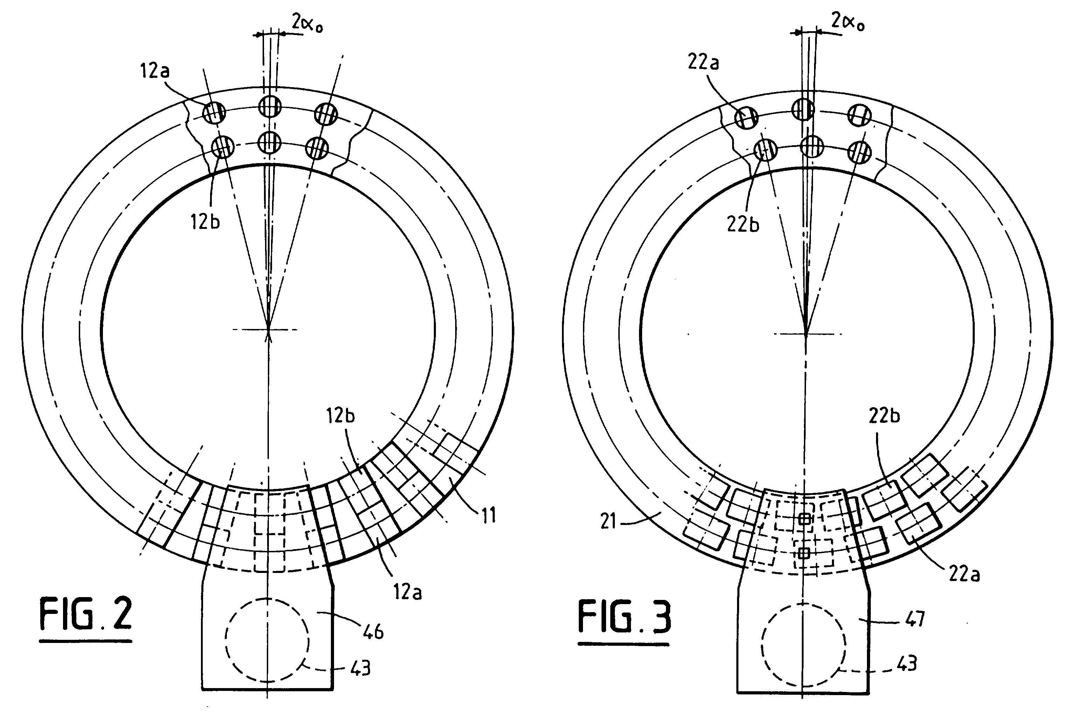

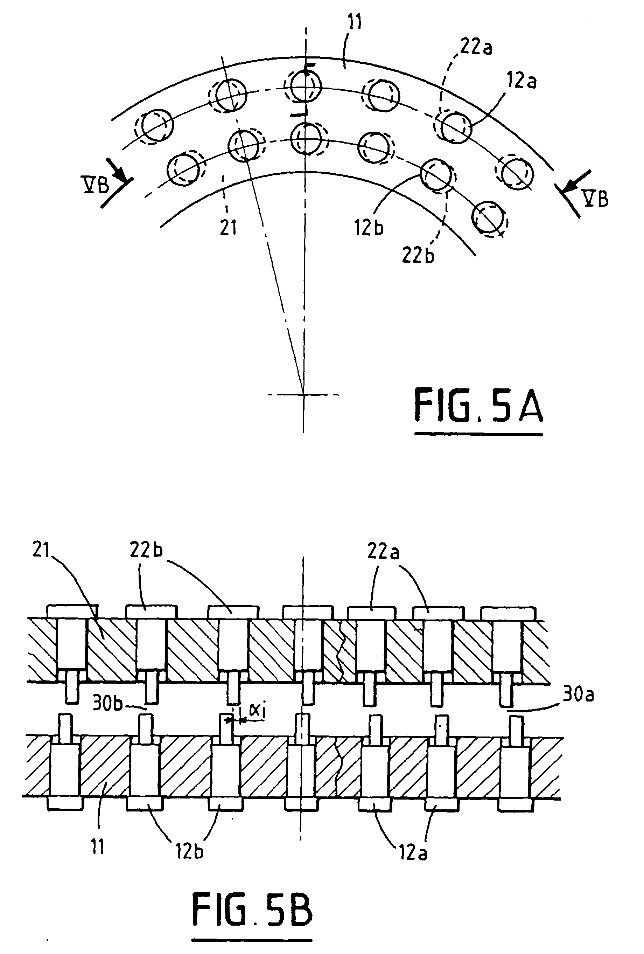

Les figures 2 et 3 sont des vues extérieures respectivement selon les plans II-II et III-III de la figure 1, arbre tournant et portions hémicylindriques ôtées. Comme il peut être observé sur ces figures, les plots en matériau ferromagnétique, qui présentent une forme de T (voir par exemple les deux modes de réalisation différents des figures 4 et 10) et sont répartis sur deux couronnes concentriques, sont disposés de telle sorte que les plots 12a, 12b des première et seconde couronnes du premier plateau 11 sont liés magnétiquement entre eux deux par deux (voir la figure 2) alors que les plots 22a, 22b des première et seconde couronnes du second plateau 21 sont au contraire isolés magnétiquement entre eux (voir la figure 3). Cette présence ou non d'une liaison magnétique résulte très simplement d'une orientation différente (à 90°) des plots des premier et second plateaux, laquelle dans un cas permet un contact entre les têtes de deux plots superposés des deux couronnes et dans l'autre cas interdit un tel contact.

Si l'on considère plus particulièrement les figures 5A et 5B, il peut être remarqué, qu'en l'absence de couple extérieur, il existe un décalage angulaire initial ($\alpha i$) entre les positions angulaires des plots magnétique du premier rotor 10 et les positions angulaires des plots magnétiques du second rotor 20. Il est important de noter que ce décalage angulaire initial entre les plots magnétiques des premier et second rotors est identique (garantissant ainsi une stricte identité des réluctances des entrefers de mesure à couple nul) mais de sens opposé sur les première et seconde couronnes.

Ainsi, lorsqu'un couple extérieur C non nul est appliqué entre les sections d'arbre tournant 1, 2 sur sa partie torsible 3 et donc entre les rotors 10, 20, un décalage angulaire relatif $\gamma$ est créé entre les plots 12a, 22a; 12b, 22b qui se font face au travers des entrefers de mesure 30a, 30b, lequel décalage produit une variation des réluctances de ces entrefers en sens opposé sur les première et seconde couronnes et donc une variation contraire correspondante sur les flux magnétiques traversant ces plots et générés par le moyen d'excitation statique.

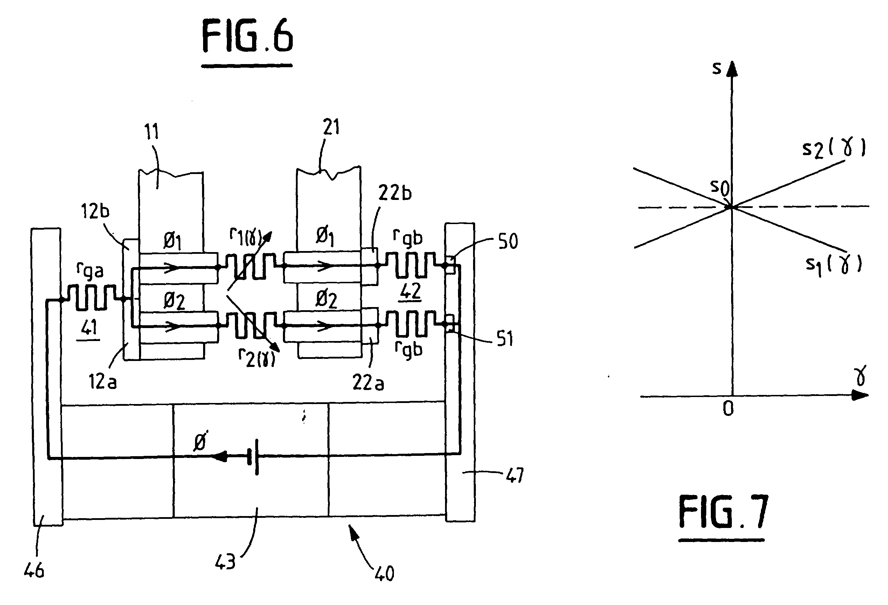

La figure 6 est un schéma électrique équivalent au circuit magnétique de mesure permettant de mieux saisir la répartition des flux magnétiques dans les différents éléments du comparateur magnétique double. Le flux d'excitation $\phi$ du circuit magnétique extérieur 40 est distribué, au travers des entrefers lisses 41, 42 de réluctance constante rga et rgb, aux plots magnétiques des première et seconde couronnes parcourus respectivement par les flux $\phi 1$ et $\phi 2$. La structure géométrique du comparateur fait ainsi apparaître deux circuits magnétiques parallèles, de réluctances $r1(\gamma)+rgb$ et $r2(\gamma)+rgb$, soumis à la même force magnétomotrice produite par l'aimant permanent 43.

Les inductions B1 et B2 régnant au niveau de l'entrefer lisse 42 étant proportionnelles aux flux correspondants $\phi 1(\gamma)$ et $\phi 2(\gamma)$, il est possible à partir des signaux délivrés s1 et s2 par les sondes magnétiques 50, 51 de déterminer le rapport $S(\gamma)=(s2-s1)/(s2+s1)=(B2-B1)/(B2+B1)=(r1(\gamma)-r2(\gamma))/(r1(\gamma)+r2(\gamma)+2rgb)$ soit, pour de petits angles $\gamma$ (domaine linéaire de la mesure) en posant:

$$r1(\gamma)=r0(1+k\gamma)$$

et

$$r2(\gamma)=r0(1+k\gamma)$$

il vient:

$$S(\gamma)=k\gamma/(1+rgb/r0)$$

Le signal de sortie $S(\gamma)$ est donc directement proportionnel à l'angle de torsion donc au couple $C(\gamma)$ exercé sur l'arbre tournant, les paramètres k, rgb, r0 étant des constantes dépendant de la seule géométrie du dispositif. Ainsi, par cette mesure différentielle toutes les variations autres que la variation angulaire $\gamma$ entre les rotors sont éliminées et les effets externes au circuit de mesure sont annulés.

La figure 7 montre dans le domaine linéaire précité les variations de la tension de sortie aux bornes des sondes de mesure magnétique 50, 51 en fonction de l'angle $\gamma$. Un ajustage fin du "zéro" du dispositif de mesure (rendu nécessaire par la non exacte identité des sondes) peut être réalisé mécaniquement en déplaçant légèrement les sondes dans leur logement ou plus simplement par un réglage électronique au niveau du circuit de traitement 60 qui va maintenant être décrit en regard de la figure 8.

Le circuit de traitement 60 réalise le traitement des signaux analogiques délivrés par les sondes 50 et 51. Il comporte également des circuits d'alimentation de ces sondes 600 ainsi qu'éventuellement ceux 610 nécessaires à la commande du moyen d'excitation. Les signaux délivrés par les deux sondes sont fournis respectivement à deux amplificateurs d'entrée 620, 630 qui assurent, outre leur fonction naturelle d'amplification, une compensation du décalage de zéro et permettent un ajustage de la sensibilité de la sonde concernée. Ces amplificateurs assurent de plus une fonction de filtrage des fréquences élevées. Les signaux de sortie de ces amplificateurs sont ensuite fournis d'une part à un circuit additionneur 640 et d'autre part à un circuit soustracteur 650 chargés respectivement d'élaborer la différence s2-s1 et la somme s2+s1. Un diviseur analogique 660 calcule alors le rapport S à partir des signaux de sortie des circuits 640 et 650, un convertisseur tension/courant fournissant en sortie de ce diviseur un signal plus facilement exploitable. Différentes prises de test référencées A à G permettent le réglage et le contrôle du fonctionnement du circuit de traitement qui est lui même alimenté de préférence par une tension de référence stabilisée (par exemple en 28 V). Bien évidemment, ce circuit de traitement peut encore comprendre le cas échéant un convertisseur analogique-numérique pour transformer le signal analogique fourni par les sondes en un signal numérique plus facile à exploiter.

Les figures 9 et 11 montrent deux exemples d'application du couplemètre magnétique selon l'invention dans lequel la partie torsible de l'arbre tournant est remplacée par un arbre de torsion 3a intercalé entre deux tronçons d'arbre tournant 1,2. Le dispositif de la figure 9 est particulièrement adapté à la mesure des couples en laboratoire avec les avantages de fiabilité, possibilité de mesure de couple dans les deux sens et à l'arrêt et étalonnage réalisable en statique.

Les extrémités du tronçon d'arbre 1, 2 sur lesquelles est emmanché l'arbre de torsion 3a sont montées dans des paliers 80, 82 par rapport à un boîtier extérieur en deux parties 84, 86 qui entoure l'arbre de torsion 3a et l'ensemble des divers éléments qui composent le couplemètre. Le circuit magnétique extérieur 40 est rapporté directement sur l'une des parties 84 du boîtier tandis que les rotors 10, 20 sont ancrés sur les extrémités de l'arbre de torsion 3a emmanchées sur les tronçons d'arbre tournant.

Afin de protéger l'arbre de torsion 3a contre les surcouples accidentels et de maintenir le déplacement angulaire relatif entre les rotors dans une plage de valeurs inférieure à la demi-largeur de plot, il peut être utilement mis en oeuvre un dispositif de protection mécanique (non représenté) limitant ces déplacements angulaires. Ce dispositif de protection mécanique peut simplement être constitué par au moins un élément mâle (par exemple un doigt) solidaire de l'un des premier et second rotors et au moins un élément récepteur femelle solidaire de l'autre des premier et second rotors pour recevoir avec un jeu prédéterminé cet élément mâle.

Le dispositif de la figure 11 montre un couplemètre selon l'invention intercalé entre un organe moteur 100 et un organe récepteur 110 d'une chaîne cinématique complexe. Il peut être noté que le nombre de plots de chaque rotor dépend essentiellement du diamètre de celui-ci, et dans le cas de petits diamètres (instrument de laboratoire par exemple), ces plots peuvent être en nombre réduit, par exemple de six à douze. Ils peuvent également être réalisés sous forme de pièces moulées à partir de poudre magnétique à résistivité élevée, lorsque les fréquences d'utilisation mises en oeuvre sont très élevées.

Il peut aussi être noté que bien que deux sondes magnétiques suffisent pour l'obtention de la mesure du couple appliqué à l'arbre de torsion ou à la partie torsible d'un arbre tournant et donc qu'un seul circuit magnétique extérieur 40 soit nécessaire, il est possible de disposer plusieurs de ces circuits autour des rotors 10, 20 pour assurer une meilleure sécurité au couplemètre par une redondance des résultats. On peut ainsi par exemple mettre en oeuvre deux dispositifs de mesure comprenant chacun un circuit magnétique extérieur 40 et placés de façon diamétralement opposée par rapport aux rotors 10,20. Une telle redondance peut notamment être recherchée dans des applications du domaine automobile où un tel couplemètre magnétique est utilisable, comme par exemple dans les directions assistées, l'anti-patinage ou le contrôle de puissance des moteurs.

**Revendications**

1. Couplemètre magnétique pour la mesure du couple (C) exercé sur un ensemble tournant comprenant des première et seconde sections d'arbre tournant (1,2) réunies par un arbre de torsion (3) et des premier et second rotors (10,20) reliés respectivement aux première et seconde sections d'arbre tournant (1,2) de telle sorte que, sous l'effet du couple (C) appliqué, ces premier et second rotors (10,20) se déplacent l'un par rapport à l'autre d'un angle de torsion ($\gamma$) proportionnel au couple (C), caractérisé en ce qu'il comprend un circuit magnétique extérieur fixe (40) en forme de U, dont le flux magnétique créé par une source d'excitation magnétique continue (43,45) se referme au travers d'entrefers à travers les premier et second rotors (10,20), en ce que les premier et second rotors (10,20) sont constitués chacun d'un plateau annulaire (11,21) en matériau amagnétique et comportent chacun deux couronnes concentriques de plots ferromagnétiques (12a, 12b, 22a,22b), les plots (12a, 12b) du premier rotor (10) étant disposés en regard des plots (22a, 22b) du second rotor (20) en définissant deux couronnes d'entrefers de mesure (30a,30b), la position relative angulaire de plots (12a,22a, 12b,22b) situés de part et d'autre du même entrefer de mesure (30a, 30b) étant telle que la réluctance d'entrefer (r1($\gamma$), r2($\gamma$)) par couple de plots (12a,22a, 12b,22b) est égale pour les deux couronnes d'entrefers (30a, 30b) à couple nul, mais que ces réluctances (r1($\gamma$), r2($\gamma$)) varient en sens inverse selon les couronnes (30a, 30b) lorsqu'apparait un angle des torsion ($\gamma$) dû au couple appliqué (C), en ce qu'il comprend en outre au moins deux sondes d'induction magnétique (50,51) logées dans l'un des entrefers lisses du circuit magnétique en U (40) et mesurant les flux magnétiques correspondant aux plots (12a ou 22a, 12b ou 22b) de chaque couronne de l'un des premier et second rotors, variant en sens inverse avec l'angle de torsion ($\gamma$), ces deux sondes (50,51) étant associées à un circuit de traitement (60) produisant un signal électrique de sortie proportionnel à l'angle de torsion ($\gamma$).

2. Couplemètre magnétique selon la revendication 1, caractérisé en ce que les plots magnétiques (12a, 12b, 22a,22b) présentent une forme en T, les plots (12a,12b) des première et seconde couronnes du premier rotor (10) étant liés magnétiquement entre eux deux par deux, et les plots (22a,22b) des première et seconde couronnes du second rotor (20) étant au contraire isolés magnétiquement entre eux.

3. Couplemètre magnétique selon la revendication 1 ou la revendication 2, caractérisé en ce que l'arbre de torsion (3) est constitué directement par un tronçon d'arbre torsible d'un arbre existant et en ce que les premier et second rotors (10,20) sont liés chacun mécaniquement, par l'intermédiaire de deux portions hémicylindrique rigides entourant le tronçon d'arbre torsible (3), à deux sections éloignées d'arbre tournant soumises à l'angle de torsion ($\gamma$), cette disposition rendant le couplemètre montable et démontable sans rupture de l'arbre.

4. Couplemètre magnétique selon l'une quelconque des revendications 1 à 3, caractérisé en ce que, pour assurer une redondance des mesures, il comprend plusieurs circuits magnétiques extérieurs fixes (40) en forme de U, répartis à la périphérie des plateaux (11, 21) des premier et second rotors (10,20), avec leurs dispositifs associés propres de sondes d'induction magnétique (50,51) et de circuits de traitement (60).

5. Couplemètre magnétique selon l'une quelconque des revendications 1 à 4, caractérisé en ce que la source d'excitation magnétique continue comprend un aimant (43).

6. Couplemètre magnétique selon l'une quelconque des revendications 1 à 4, caractérisé en ce que la source d'excitation magnétique continue comprend un électroaimant (45).

7. Couplemètre magnétique selon l'une quelconque des revendications 1 à 6, caractérisé en ce que les sondes d'induction magnétique (50,51) sont constituées par des sondes à effet Hall.

8. Couplemètre magnétique selon l'une quelconque des revendications 1 à 6, caractérisé en ce que, les sondes d'induction magnétique (50, 51) sont constitués par des magnéto-résistances.

9. Couplemètre magnétique selon l'une quelconque des revendications 1 à 8, caractérisé en ce que les plots magnétiques (12a,12b, 22a,22b) sont usinés dans un matériau ferromagnétique conventionnel.

10. Couplemètre magnétique selon l'une quelconque des revendications 1 à 8, caractérisé en ce que les plots magnétiques (12a,12b, 22a,22b) sont obtenus par frittage à partir de poudre magnétique à très haute résistivité.

11. Couplemètre magnétique selon l'une quelconque des revendications 1 à 10, caractérisé en ce que les circuits (60) d'alimentation des sondes d'induction magnétique et de traitement des signaux délivrés par ces sondes sont placés contre l'une des parois latérales externes du circuit magnétique extérieur (40) fixe en forme de U.

12. Couplemètre magnétique selon l'une quelconque des revendications 1 à 11, caractérisé en ce qu'il est incorporé dans un dispositif de servocommande d'un servomoteur, tel qu'un servomoteur d'une direction assistée électriquement d'un véhicule routier.

13. Couplemètre magnétique selon l'une quelconque des revendications 1 à 11, caractérisé en ce qu'il est incorporé ou associé à l'arbre d'une machine thermique, tel celui d'une turbomachine.

14. Couplemètre magnétique selon l'une quelconque des revendications 1 à 11, caractérisé en ce qu'il est incorporé ou associé à l'arbre d'une machine électrique, tel celui d'un alternateur de centrale électrique.

15. Couplemètre magnétique selon l'une quelconque des revendications 1 à 14, caractérisé en ce qu'il comprend un dispositif de protection mécanique limitant les déplacements angulaires relatifs entre les premier et second rotors (10,20) de manière à limiter le couple maximal applicable à l'arbre de torsion, et en ce que le dispositif de protection mécanique comprend au moins un élément mâle solidaire de l'un des premier et second rotors (10,20) et au moins un élément récepteur femelle solidaire de l'autre des premier et second rotors pour recevoir avec un jeu prédéterminé cet élément mâle.

**Patentansprüche**

1. Magnetischer Drehmomentmesser zur Messung des auf eine drehende Einheit ausgeübten Moments (C), mit einem ersten und einem zweiten, von einer Torsionwelle (3) verbundenem Drehwellenabschnitt (1, 2) und einem ersten und einem zweiten Rotor (10, 20), die jeweils mit dem ersten und den zweiten Drehwellenabschnitt (1, 2) verbunden sind, so daß sich der erste und der zweite Rotor (10, 20) unter der Wirkung des ausgeübten Moments ( C ) gegenseitig um einen Torsionswinkel ($\gamma$) proportional zum Moment ( C ) verschieben, dadurch gekennzeichnet, daß er einen festen, externen, U-förmigen Magnetkreis (40) aufweist, dessen von einer ständigen magnetischen Erregungsquelle (43, 45) erzeugter Magnetfluß sich durch Luftspälte des ersten und zweiten Rotors (10, 20) schließt, daß der erste und zweite Rotor (10, 20) jeweils aus einer Ringplatte (11, 21) aus nicht magnetischem Werkstoff bestehen und jeweils zwei konzentrische Kronen aus ferromagnetischen Klötzen (12a, 12b, 22a, 22b) aufweisen, wobei die Klötze (12a, 12b) des ersten Rotors (10) gegenüber den Klötzen (22a, 22b) des zweiten Rotors (20) angeordnet sind und zwei Meßluftspaltkronen (30a, 30b) definieren, und wobei die relative Winkelposition der auf beiden Seite des gleichen Meßluftspalts (30a, 30b) angeordneten Klötze (12a, 22a, 12b, 22b) so gestaltet ist, daß die Luftspaltreluktanz ($r1(\gamma)$, $r2(\gamma)$) pro Klotzpaar (12a, 22a, 12b, 22b) für die beiden Luftspaltkronen (30a, 30b) mit Moment null gleich ist, während diese Reluktanzen ($r1(\gamma)$, $r2(\gamma)$) jedoch in entgegengesetzter Richtung je nach Kronen (30a, 30b) schwanken, wenn aufgrund des ausgeübten Moments ( C ) ein Torsionswinkel (γ) erscheint, daß er außerdem mindestens zwei magnetische Induktionssonden (50, 51) umfaßt, die in einem der glatten Luftspalte des U-förmigen Magnetkreises (40) angeordnet sind und die Magnetflüsse messen, die den Klötzen (12a oder 22a, 12b oder 22b) jeder Krone des ersten oder zweiten Rotors entsprechen, die in entgegengesetzter Richtung zum Torsionswinkel (γ) schwanken, wobei diese beiden Sonden (50, 51) einem Verarbeitungskreis (60) angeschlossen sind, der ein elektrisches Ausgangssignal proportional zum Torsionswinkel (γ) erzeugt.

2. Magnetischer Drehmomentmesser nach Anspruch 1, dadurch gekennzeichnet, daß die Magnetklötze (12a, 12b, 22a, 22b) eine T-Form aufweisen, wobei die Klötze (12a, 12b) der ersten und zweiten Krone des ersten Rotors (10) paarweise magnetisch miteinander verbunden sind, und die Klötze (22a, 22b) der ersten und zweiten Krone des zweiten Rotors (20) magnetisch voneinander getrennt sind.

3. Magnetischer Drehmomentmesser nach einem der Ansprüche 1 oder 2, dadurch gekennzeichnet, daß die Torsionswelle (3) direkt aus einem drehbaren Wellenabschnitt einer bestehenden Welle besteht, und daß der erste und zweite Rotor (10,20) jeweils mechanisch über zwei starre halbzylindrische Abschnitte, die den drehbaren Wellenabschnitt (3) umgeben, mit zwei entfernten Drehwellenabschnitten, die dem Torsionswinkel (γ) unterliegen, verbunden sind, wobei der Drehmomentmesser dank dieser Anordnung ohne Wellenbruch montiert und demontiert werden kann.

4. Magnetischer Drehmomentmesser nach einem der Ansprüche 1 bis 3, dadurch gekennzeichnet, daß er, um eine Redundanz der Messungen zu gewährleisten, mehrere externe, feste, U-förmige Magnetkreise (40) umfaßt, die am Umfang der Platten (11, 21) des ersten und zweiten Rotors (10, 20) verteilt sind, mit ihren eigenen zugehörigen Vorrichtungen von magnetischen Induktionssonden (50, 51) und Verarbeitungskreisen (60).

5. Magnetischer Drehmomentmesser nach einem der Ansprüche 1 bis 4, dadurch gekennzeichnet, daß die ständige magnetische Erregungsquelle einen Magneten (43) umfaßt.

6. Magnetischer Drehmomentmesser nach einem der Ansprüche 1 bis 4, dadurch gekennzeichnet, daß die ständige magnetische Erregungsquelle einen Elektromagneten (45) umfaßt.

7. Magnetischer Drehmomentmesser nach einem der Ansprüche 1 bis 6, dadurch gekennzeichnet, daß die magnetischen Induktionssonden (50, 51) aus Halleffekt-Sonden bestehen.

8. Magnetischer Drehmomentmesser nach einem der Ansprüche 1 bis 6, dadurch gekennzeichnet, daß die magnetischen Induktionssonden (50, 51) aus Magnetwiderständen bestehen.

9. Magnetischer Drehmomentmesser nach einem der Ansprüche 1 bis 8, dadurch gekennzeichnet, daß die Magnetklötze (12a, 12b, 22a, 22b) aus einem konventionellen ferromagnetischen Werkstoff bestehen.

10. Magnetischer Drehmomentmesser nach einem der Ansprüche 1 bis 8, dadurch gekennzeichnet, daß die Magnetklötze (12a, 12b, 22a, 22b) im Sinterverfahren ab einem Magnetpulver mit sehr hoher Resistivität hergestellt werden.

11. Magnetischer Drehmomentmesser nach einem der Ansprüche 1 bis 10, dadurch gekennzeichnet, daß die Versorgungskreise (60) der magnetischen Induktionssonden und Verarbeitungskreise der von diesen Sonden gelieferten Signale gegen eine der externen Seitenwände des festen, externen, U-förmigen Magnetkreises (40) angeordnet sind.

12. Magnetischer Drehmomentmesser nach einem der Ansprüche 1 bis 11, dadurch gekennzeichnet, daß er in eine Servorsteuervorrichtung eines Servomotors, wie zum Beispiel eines Servomotors einer elektrischen Servolenkung eines Straßenfahrzeugs eingebaut ist.

13. Magnetischer Drehmomentmesser nach einem der Ansprüche 1 bis 11, dadurch gekennzeichnet, daß er in eine Welle einer Wärmemaschine, zum Beispiel einer Turbomaschine, eingebaut oder ihr zugeordnet ist.

14. Magnetischer Drehmomentmesser nach einem der Ansprüche 1 bis 11, dadurch gekennzeichnet, daß er in eine Welle einer Strommaschine, zum Beispiel eines Stromwerkgenerators, eingebaut oder ihr zugeordnet ist.

15. Magnetischer Drehmomentmesser nach einem der Ansprüche 1 bis 14, dadurch gekennzeichnet, daß er eine mechanische Schutzvorrichtung zur Begrenzung der relativen Winkelverschiebungen zwischen dem ersten und zweiten Rotor (10, 20) umfaßt, so daß das maximale auf die Torsionswelle ausgeübte Moment beschränkt wird, und daß diese Schutzvorrichtung mindestens ein Steckelement am ersten oder am zweiten Rotor (10, 20) und mindestens ein Aufnahmeelement am anderen ersten oder zweiten Rotor umfaßt, um das Steckelement mit einem vorbestimmten Spiel aufzunehmen.

## Claims

1. A magnetic torsion meter for measuring torque (C) exerted on a rotating assembly comprising the first and second sections of a rotating shaft brought together by a torsion shaft, and first and second rotors, respectively connected to the first and second sections of the rotating shaft so that, under the effect of the applied torque (C), these first and second rotors moving the one relative to the other by an angle of torsion γ, proportional to torque (C), characterized in that it comprises an exterior U-shaped fixed magnetic circuit, the magnetic flux of which, created by a continuous magnetic source of excitation closes by means of gaps through the first and second rotors, and in that the first and second rotors each consist of an annular disk made of non magnetic material, each rotor comprising two concentric coils of ferromagnetic pins, pins of the first rotor facing pins of the second rotor, while defining two measuring gaps, the relative angular position of pins located on both sides of the same measuring gap, being such that the gap reluctance (r1(γ), r2(γ) per pair of pins is equal for both gap coils when the torque is nil, but that these reluctances (r1(γ), r2( γ) vary in the opposition direction according to the coils when an angle of torsion (γ ) appears as a result of the applied torque (C), in that in addition it comprises at least two magnetic induction sensors housed in one of the smooth gaps of the U-shaped magnetic circuit, and measuring the magnetic flux corresponding to pins of each coil of one of the first and second rotors, varying inversely with the angle of torsion (γ), these two sensors being associated to a treatment circuit, which produces an electric output signal proportional to the angle of torsion (γ).

2. A magnetic torsion meter according to Claim 1, characterized in that said magnetic pins are T-shaped, pins of the first and second coils of first rotor being connected magnetically two by two, and inversely pins the first and second coils of second rotor being magnetically isolated the one from the other.

3. A magnetic torsion meter according to Claim 1, characterized in that the torsion shaft directly consists of a twistable shaft section of an existing shaft, such that said first and second rotors are each mechanically connected, through two rigid hemicylindrical sections surrounding the twistable shaft section, to two sections separated from the rotating shaft subjected to the angle of torsion (γ), this arrangement making the mounting and dismounting of the torsion meter possible without breaking the shaft.

4. A magnetic torsion meter according to Claim 1, characterized in that, in order to ensure a measurement redundancy, it comprises several exterior U-shaped fixed magnetic circuits, distributed round disks of the first and second rotors, together with their own associated devices of magnetic induction sensors and treatment circuits.

5. A magnetic torsion meter according to Claim 1, characterized in that the continuous source of magnetic induction comprises a magnet.

6. A magnetic torsion meter according toClaim 1, characterized in that the continuous source of magnetic excitation comprises a solenoid.

7. A magnetic torsion meter according to claim 1, characterized in that said magnetic induction sensors consist of Hall effect sensors.

8. A magnetic torsion meter according to Claim 1, characterized in that said magnetic induction sensors consist of magneto resistors.

9. A magnetic torsion meter according to Claim 1, characterized in that said magnetic pins are machined in a conventional ferromagnetic material.

10. A magnetic torsion meter according to Claim 1, characterized in that said magnetic pins are obtained by sintering from high resistivity magnetic powder.

11. A magnetic torsion meter according to Claim 1, characterized in that said feeding circuits of the magnetic induction sensors and treatment of the signals delivered by these sensors, are located against one of the exterior lateral walls of the exterior U-shaped fixed magnetic circuit.

12. A magnetic torsion meter according to Claim 1, characterized in that it is incorporated in a motor operator servo control device, such as a motor operator for power steering electrically assisted of road vehicles.

13. A magnetic torsion meter according to Claim 1, characterized in that it is incorporated or associated to the shaft of a thermal engine , such as a turbo-engine.

14. A magnetic torsion meter according to Claim 1, characterized in that it is incorporated or associated to the shaft of an electric engine, such as that of an alternator in a power plant.

15. A magnetic torsion meter according to Claims 1, characterized in that it comprises a mechanical protective device limiting the relative angular displacements between said first and second rotors so as to limit the maximum torque applicable to the torsion shaft, and in that the mechanical protective device comprises at least one male element interdependent to one of said first and second rotors and at least one female receiving element interdependent to the other in said first and second rotors to receive this male element with a predetermined clearance.

FIG.1

FIG.4

EP 0 682 238 B1

FIG.2

FIG.3

$2\alpha_0$

12a

12b

12b

11

12a

46

43

22a

22b

22b

21

22a

47

43

$2\alpha_0$

EP 0 682 238 B1

FIG.5A

FIG.5B

13

## FIG.6

## FIG.7

EP 0 682 238 B1

FIG.8

FIG. 10

FIG. 11

FIG. 9